Europäisches Patentamt

European Patent Office

Office européen des brevets

(19)

(11) Publication number: **0 188 532 B1**

# EUROPEAN PATENT SPECIFICATION
## published in accordance with Art. 158(3) EPC

(12)

(45) Date of publication of patent specification: **22.05.91**

(51) Int. Cl.⁵: **F16D 3/26**, F16C 33/04

(21) Application number: **85903557.8**

(22) Date of filing: **27.06.85**

(86) International application number:
**PCT/US85/01216**

(87) International publication number:
**WO 86/00380 (16.01.86 86/02)**

(54) POWER TRANSMISSION DEVICE.

(30) Priority: **27.06.84 US 625303**

(43) Date of publication of application:
**30.07.86 Bulletin 86/31**

(45) Publication of the grant of the patent:
**22.05.91 Bulletin 91/21**

(84) Designated Contracting States:
**FR**

(56) References cited:
| | |
|---|---|
| **FR-A- 461 477** | **FR-A- 945 700** |
| **FR-A- 1 120 011** | **FR-A- 1 217 833** |
| **FR-A- 1 228 232** | **GB-A- 1 174 628** |
| **GB-A- 1 462 274** | **GB-A- 2 117 088** |
| **US-A- 1 885 646** | **US-A- 2 106 860** |
| **US-A- 2 222 491** | **US-A- 2 265 065** |
| **US-A- 2 648 580** | **US-A- 2 653 062** |
| **US-A- 3 204 427** | **US-A- 3 348 887** |
| **US-A- 3 961 104** | |

(73) Proprietor: **CLEVELAND MOTIVE PRODUCTS, INC.**
**30505 Clemens Road**
**Westlake, OH 44145(US)**

(72) Inventor: **MACIAG, Walter**
**29323 Lincoln Road**
**Bay Village, OH 44140(US)**
Inventor: **STOREY, Ralph, E.**
**998 Cahoon Road**
**Westlake, OH 44145(US)**

(74) Representative: **Crisp, David Norman et al**
**D. YOUNG & CO. 10 Staple Inn**
**London, WC1V 7RD(GB)**

EP 0 188 532 B1

## Description

This invention is directed to a power transmission device which includes trunnion and bearing sets for interconnecting the driving shaft of a power generating unit to a driven shaft of an operating unit in order to perform a mechanical function.

The mechanical transmission of power normally requires a transfer device which couples the power generating unit (source) to the operating unit in order to perform a mechanical function. The transfer device simultaneously couples the two units and transfers power between them. Most often, shafts are used in power transmission and are joined by the transfer device for rotational and/or reciprocating energy transfer. This arrangement is often referred to as a "drive shaft" and the transfer device is commonly called a "universal joint" where four (4) trunnions are utilized or a "tripot" where three (3) trunnions are used. The name "universal joint" is most commonly used when referring to any power transfer device regardless of the number of trunnions.

A drive shaft will normally utilize two universal joints whereas a "drive line" may use in excess of two universal joints and shafts.

The universal joint functions to (a) transmit a high starting or high stopping torque including a reversal of direction of rotation, (b) maintain a continuous transfer of power at either constant or varying drive shaft revolutions per minute, and (c) maintain a maximum power transfer between the power source and the operating unit or units during all relative drive line angle and length variations and vibrations.

A common universal joint in use today is that which is sometimes referred to as the Hooke universal joint. In the Hooke joint, the driving and driven shafts are each provided with a yoke, the respective yokes being interconnected by a cross comprised of trunnion-bearing sets. A plurality of transfer surfaces, essentially cylindrical in shape, are ground at the respective trunnions of the cross. Each trunnion transfer surface is adapted to receive a bearing cup which is provided internally with a plurality of needles. Crosses with four (4) transfer surfaces (trunnions) are in widespread use in rear wheel drive vehicles and industrial drive shafts. Similarly, tripots with three (3) transfer surfaces (or trunnions) are in widespread use in front wheel drive vehicles.

The needles used in bearing cups of prior art universal joints serve the function of reducing friction between the trunnion and the bearing cup by rolling, thereby accommodating the relatively slight movement between these members. The needles further serve the function of transferring and maintaining the transmission of torque forces between the bearing cup and the trunnion.

The use of needles in bearing cups is satisfactory insofar as the transmission of torque thru the universal joint. Needles, however, have two (2) principal drawbacks.

First, needles add a cost factor in the manufacture of universal joints both in the cost of the needles themselves and in the cost of assembly of a trunnion and bearing set due to the necessity of handling the needles in assembly. A second drawback, insofar as needles, is the fact that unless sufficiently lubricated, they will eventually wear and deteriorate to the point that the trunnion and bearing set of the universal joint must be replaced.

US Patents Nos. 1885646, 2265065, 2222491 and 2106860 and FR-A-1217833 describe various bearing members or arrangements for universal joints. US-A- 1885 646 already discloses the features of the precharacterising part of the independant claims. The known bearing members provide interrupted inner or inner and outer walls being in direct bearing contact with uninterrupted cylindrical transfer surfaces. Said interrupted walls are either not made from the same continuous homogeneous material as their bearing member or the homogeous bearing member according to US-A- 2106 860, having interrupted inner and outer bearing surfaces, merely defines a floating intermediate bearing sleeve between two shaft means.

The primary aim of this invention is to eliminate the necessity for needles, balls or other rolling members between a trunnion and a bearing cup in a universal joint.

It is a further aim of embodiments of this invention to eliminate the necessity for introducing lubricants such as greases and oils in a universal joint, which lubricants are normally required to insure low friction in the joint.

In accordance with one aspect the invention provides a power transmission system comprising:

    a) a driving shaft;

    b) a driven shaft;

    c) a power transmission device interconnecting said driving and driven shafts;

    d) said power transmission device including a load transfer element having a plurality of trunnions (39, 69), each trunnion defining a transfer surface (38, 70);

    e) a bearing member (86) associated with each of said transfer surfaces (38, 70);

    f) said bearing member (86) having a surface which is operatively connected to a respective shaft;

characterised in that each bearing member (86) is in direct contact with a respective transfer surface (38, 70), at a plurality of bearing surfaces (94, 108) defined either by an interrupted internal wall of said bearing member (86) or by an interrupted external wall of a respective trunnion (39, 69), said bearing surfaces (94, 108) being in direct bearing contact with an uninterrupted cylindrical transfer surface (96) on the trunnion or bearing member respectively, and said bearing surfaces being integral with and formed from the same continuous homogeneous material as their respective bearing member (86) or trunnion (39, 69), there being no junction or interface between said bearing surfaces and the body of the bearing member or trunnion respectively.

In a further aspect, we provide a load transfer element for use in a power transmission system in accordance with the invention comprising:

a) a load transfer element having a plurality of trunnions (39, 69), each trunnion defining a transfer surface (38, 70);

b) a bearing member (86) associated with each of said transfer surfaces (38, 70); and

c) said bearing member (86) having a surface which may be operatively connected to a respective shaft;

characterised in that each bearing member (86) is in direct contact with a respective transfer surface (38, 70), at a plurality of bearing surfaces (94, 108) defined either by an interrupted internal wall of said bearing member (86), or by an interrupted external wall of a respective trunnion (39, 69), said bearing surfaces (94, 108) being in direct bearing contact with an uninterrupted cylindrical transfer surface (96) on the trunnion or bearing member respectively, and said bearing surfaces being integral with and formed from the same continuous homogeneous material as their respective bearing member (86) or trunnion (39, 69), there being no junction or interface between said bearing surfaces and the body of the bearing member or trunnion respectively.

In a still further aspect, we provide a method of manufacture of a load transfer element of a joint interconnecting a driving shaft and a driven shaft in accordance with wherein

a) a load transfer element is formed having a plurality of trunnions, each trunnion defining a transfer surface;

b) a plurality of bearing members is formed each bearing member having an internal surface which defines integral bearing surfaces which may directly contact a respective transfer surface;

c) said load transfer element and said bearing members are assembled.

Briefly described, this invention provides for an improved universal joint which includes improved trunnion and bearing sets.

In the preferred embodiment, the transfer device, which may be either four trunnion, three trunnion, or two trunnion, is provided with a plurality of transfer surfaces which are essentially cylindrical in shape and which are ground at the respective ends of the trunnions. A plurality of bearing cups are provided, one for each of the trunnion bearing surfaces. The bearing cups are defined by an essentially cylindrical sidewall. The cups are normally closed ended in a cross arrangement and open ended in a tripot arrangement. Integral bearing surfaces are defined at the internal wall of the bearing cup. In the preferred embodiment, these bearing surfaces are essentially semi-circular in cross-section and extend the full depth of the cup. When the cup is placed over the end of the trunnion, the bearing surfaces are adapted to contact the transfer surface of the trunnion.

The bearing cup, in the preferred embodiment, is fabricated using powder metallurgy techniques thereby making it possible to define and produce internal bearing surfaces which are integral with the cup.

The bearing cup may also be produced using conventional machining techniques.

Whether manufactured using powder metallurgy or machining techniques the necessity for the use of needles, balls or other rolling elements is eliminated.

Description of the Preferred Embodiment

A description of the preferred embodiment of the invention will now be made with reference to the accompanying figures in which:

FIGURE 1 is a schematic view of a drive line showing the incorporation of universal joints therein;

FIGURE 2 is an elevational view, partly in section, showing a prior art universal joint incorporating four trunnion and bearing cup sets;

FIGURE 3 is a top elevational view, partly in section, showing a prior art cross;

FIGURE 4 is an elevational exploded view, partly in section, showing a prior art bearing cup with an associated transfer surface of a prior art trunnion;

FIGURE 5 is an elevational exploded view showing a three trunnion prior art tripot which is used primarily in front wheel drive vehicles;

FIGURE 6 is a side elevational view partly in section of the bearing cup used in the preferred embodiment of this invention;

FIGURE 7 is an end elevational view of the bearing cup of FIGURE 6 and showing in section the transfer surface of a trunnion associated therewith;

FIGURE 8 is a schematic view showing a modified embodiment of a trunnion for use in connection with the universal joint of this invention;

FIGURE 9 is an end elevational view of a modified form of bearing cup used in the universal joint of this invention;

FIGURE 10 is an end elevational view of a modified bearing cup of this invention;

FIGURE 11 is a side elevational view, partly in section, of a thru cup of this invention;

FIGURE 12 is an end elevational view of a modified thru cup of this invention and showing, in section, the trunnion transfer surface and housing associated therewith; and,

FIGURES 13a, 13b, 13c show variations of bearing surfaces.

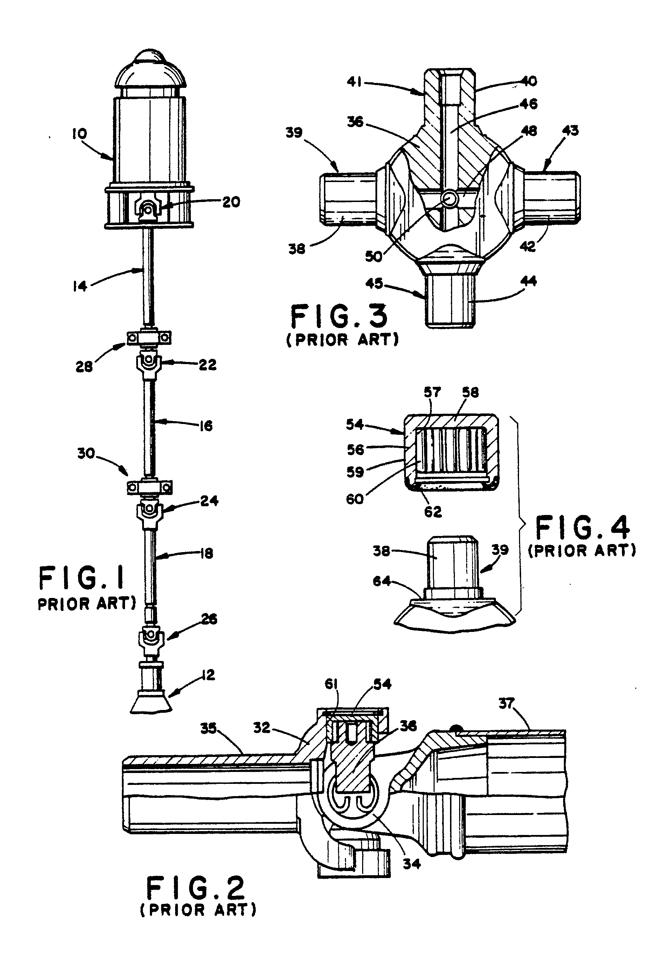

Attention will first be directed to FIGURE 1 wherein there is shown a drive line interconnecting a power source to an operating unit. The power source in FIGURE 1 is identified at 10 and may be in the form of an electric motor or, alternately, an internal combustion engine. The driven or operating unit is designated 12 in FIGURE 1. A drive line interconnects the power source 10 with the operating unit 12 and is defined by a plurality of drive shafts 14, 16, 18. Universal joints 20, 22, 24 and 26 of FIGURE 1 provide for an interconnection of the respective drive shafts 14, 16 and 18 with each other and with the power source 10 and the operating unit 12. Center shaft support bearings 28, 30 are advantageously used to support the drive line.

The structure of FIGURE 1 generally describes and illustrates a drive line for the transmission of power from an electric motor and the like to an operating unit or load. As will be seen from FIGURE 1, the universal joints perform a coupling function for the transmission of power from one member to another.

In FIGURE 2, a prior art universal joint is shown. The respective drive shafts 35, 37 are provided with yokes 32, 34 which are interconnected by means of a cross 36 which includes bearing cups 54. For a description of the cross 36, attention will now be directed to FIGURE 3.

The cross 36 of FIGURE 3 is a four trunnion load transfer element defined by trunnions 39, 41, 43, 45 and by essentially cylindrical transfer surfaces 38, 40, 42, 44 which are ground or otherwise defined at the respective trunnions. Drilled cross passages 46, 48 are provided internally of the cross and define lubricant passageways to feed lubricant from a fitting 50 which is a grease fitting or the like. Lubricant is fed from the fitting 50 thru passages 46, 48 out to the transfer surfaces 38, 40, 42 and 44, as may be seen in FIGURE 3.

The lubricant passageways and fitting are provided for the purpose of enabling lubricant to be fed to the roller needles within the bearing cup as will be described below.

Reference will now be made to FIGURE 4 wherein a prior art roller needle bearing cup is shown before being positioned on a trunnion.

The bearing cup of FIGURE 4 is designated 54 and includes a generally cylindrical sidewall 56, a generally cylindrical inner wall 57 and a closed end 58.

A plurality of roller needles 60 are positioned within the bearing cup 54 circumferentially around the internal wall 57 thereof.

A seal 62 is provided in the form of a skirt depending from the bearing cup. The seal serves the purpose of retaining the lubricant within the cup.

When the bearing cup 54 of FIGURE 4 is installed on the trunnion, the roller needles 60 make contact with transfer surface 38 of the trunnion 39. The seal 62 contacts surface 64 of the trunnion and affords sealing of the internal annular chamber in which the roller needles are positioned. It can, thus, be appreciated that with reference to FIGURES 3 and 4, lubricant is fed from the fitting 50 thru passages 46, 48, and is directed into the bearing cup 54 affording lubrication for the roller needles 60.

The complete assembly of the cross and bearing cup of FIGURES 3 and 4 is shown in FIGURE 2. The bearing cup 54 is received within a respective yoke 32, 34 thus providing an interconnection between the yoke and the trunnion.

The transmission of torque thru the universal joint of FIGURE 2 is accomplished at the transfer surfaces of the cross, bearing cup and yoke. Specifically, such transfer surfaces are designated 38, 40, 42 and 44 in the cross, 57 and 59 in the bearing cup and 61 in the yoke.

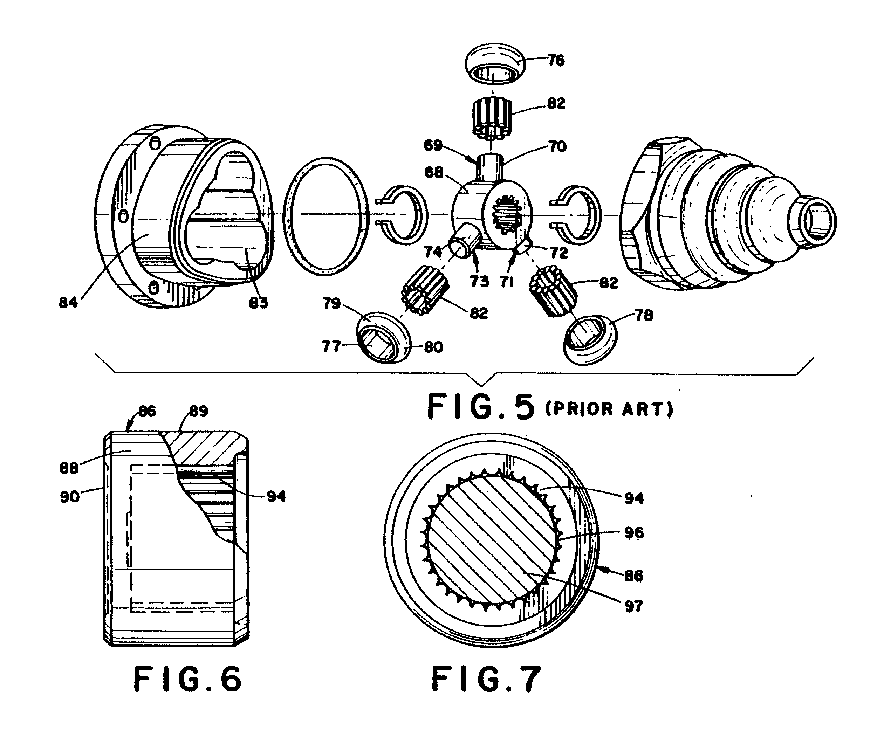

Again with reference to prior art universal joints, a universal joint as is used in front wheel drive vehicles is shown in FIGURE 5. The tripot of FIGURE 5 includes three trunnions 69, 71 and 73 which define transfer surfaces 70, 72 and 74. Bearing cups 76, 78, 80 are associated with each of the respective transfer surfaces of the trunnions. The bearing cups of FIGURE 5 are sometimes referred to as thru cups for the reason that the cup is open at both ends and does not include the transverse wall such as is shown at 58 in FIGURE 4. A plurality of needles 82 are adapted to contact the transfer surfaces 70, 72 and 74 of the tripot of FIGURE 5. The needles are retained by the respective bearing cups 76, 78, 80. The bearing cups, in turn, are received within the housing 84.

The transmission torque thru the tripot of FIGURE 5 is accomplished at the transfer surfaces of the tripot, bearing cup and housing. Specifically, such transfer surfaces are designated 70, 72 and 74 in the tripot, 77 and 79 in the thru cups 76, 78 and 80 and 83 in the housing 84.

The transfer devices of FIGURE 2 (universal joint) and FIGURE 5 (tripot) both require the use of roller needles to reduce friction, thereby accommodating the relatively small movement between the bearing cup and the trunnion transfer surfaces. The needles further transfer and maintain torque forces between the bearing cup and the trunnion transfer surfaces.

While, in operation, a single rotation of shaft 35 of FIGURE 2 will produce a single rotation of shaft 37, the cross 36 of the universal joint also makes a complete rotation. However, there is little relative movement between the trunnion transfer surfaces and the needle rollers as the cross rotates. That is to say, while the shafts 35 and 37, along with the interconnecting universal joint rotate as a unit, there is, within the bearing cup, little relative movement between the roller needles and the transfer surfaces of the trunnion. Contrary to expectations, the roller needles do not, themselves, normally make complete revolutions within the bearing cup as the universal joint rotates. It is this phenomenon of limited movement between the bearing cup and the trunnion which permits the utilization of the needleless bearing cup of this invention. The limited relative movement between the bearing cup and the trunnion further permits the utilization of powder metallurgy techniques in the manufacture of either one or both of these elements, as well as the use of oil impregnated metals to afford lubrication for the universal joint.

The amount of relative movement between the bearing cup and the trunnion has been described as being slight. Another way to describe the relative movement between the elements is to say that there is limited angular and/or longitudinal displacement between these members. In its extreme, the movement between the bearing cup and the trunnion is aperiodically oscillatory either in the longitudinal and/or the radial direction.

The recognition by applicants of the limited relative movement between the bearing cup and the trunnion while in use resulted in the examination of various structurally shaped transfer surfaces of the trunnion, the bearing cup and the trunnion and bearing cup in combination to eliminate the use of roller needles in universal joints. Specifically, the use of powder metallurgy techniques to produce trunnions and bearing cups in which there were defined integral bearing surfaces resulted.

With reference to FIGURES 6 and 7, a bearing cup manufactured utilizing powder metallurgy techniques and having internal integral bearing surfaces is shown.

With reference to FIGURE 6, the improved bearing cup 86 is defined by an essentially cylindrical sidewall 88 having a cylindrical outer surface 89 and a closed end 90.

With reference to FIGURE 7, a plurality of bearing surfaces 94 are defined at the internal surface of the sidewall of the cup and, in the preferred embodiment of FIGURE 7, are essentially semi-circular in cross-section so as to approximate the profile of a plurality of needles arranged substantially side-by-side. As seen in FIGURE 6, the bearing surfaces 94 extend from approximately the outer edge of the bearing cup inwardly throughout substantially the entire depth of the cup.

When the bearing cup 86 of FIGURE 6 is positioned about an end of a trunnion, contact is made by the bearing surfaces 94 with the transfer surface of the trunnion. That transfer surface is designated 96 in FIGURE 7 and is essentially a cylindrical surface which is ground or otherwise defined on the end of the trunnion 97.

The bearing surfaces 94 of FIGURE 7, thus, approximate the shape of roller needles insofar as their contact with the transfer surface 96 of the trunnion. Since the bearing surfaces 94 of FIGURE 7 are integral with the cup 86, there can be no relative rotation between the bearing surfaces 94 and the cup. However, as has been previously noted, since there is relatively little movement between the bearing cup and the trunnion during rotation of the drive shaft and since the roller needles of the prior art do not, themselves, rotate continuously in use, the integral bearing structure of FIGURE 7 affords the advantages of roller needles insofar as bearing contact with the trunnion transfer surface but without the disadvantages of increased costs for the needles and increased costs associated with the assembly thereof.

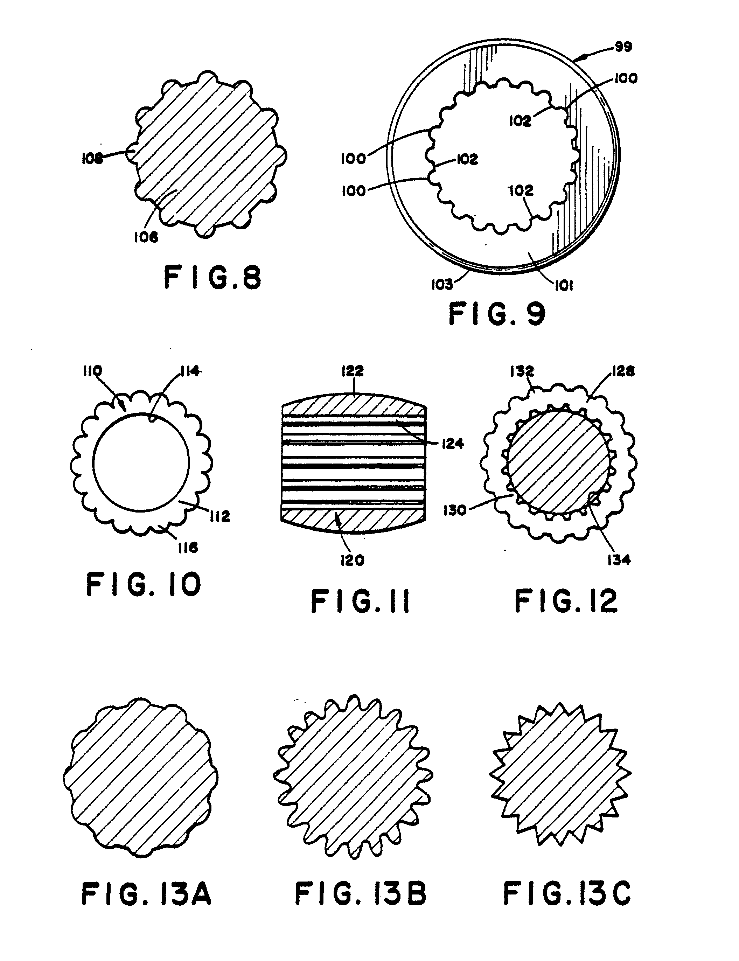

An alternate embodiment of the bearing cup for use in this invention is shown in FIGURE 9. In FIGURE 9, the bearing cup 99 is provided with a plurality of spaced, essentially semi-circular recesses 100 in the sidewall 101 of the cup which are joined together by means of bearing surfaces 102. In the embodiment of FIGURE 9, the bearing surfaces 102 are defined as segments of a cylindrical surface having a land width of approximately 0.75 mm (.030 inches). The outside surface of cup 99 is essentially cylindrical as shown at 103.

A further modified or alternate embodiment of the invention is shown in FIGURE 10. In FIGURE 10, the bearing cup 110 is provided with a sidewall 112 which includes an essentially cylindrical internal surface 114. At the outside surface of sidewall 112 there are provided a plurality of bearing surfaces 116 which, in the embodiment of FIGURE 10, are essentially semi-circular in cross-section so as to approximate the profile of a plurality of needles arranged substantially side-by-side. The embodiment of FIGURE 10 is, thus, a reversal of the bearing surfaces from that shown in FIGURE 7. Whereas, in FIGURE 7, the bearing surfaces are defined at the internal surface of the bearing cup, such bearing surfaces are defined, in FIGURE 10, at the external surface thereof. The bearing cup of FIGURE 10, like that of FIGURE 7, is a closed end cup particularly adapted for use with the four trunnion cross of FIGURE 3.

In a still further modified form of this invention, the bearing cup may be provided with bearing surfaces on both the internal and external walls thereof. Although not shown in the drawings, it should be understood that such structure would include the internal bearing surfaces 94 of FIGURE 7 and the external bearing surfaces 116 of FIGURE 10.

FIGURE 11 shows a bearing cup of this invention of the thru type. The bearing cup of FIGURE 11, thus, has application in transfer devices such as that shown in FIGURE 5. The bearing cup of FIGURE 11 is a thru cup 120 having a convex external surface 122 which is adapted to be received within the housing 84 of FIGURE 5 to make contact with the housing transfer surface 83. The internal wall of the bearing cup of FIGURE 11 includes a plurality of bearing surfaces 124 which are of the type shown in FIGURES 6 and 7. That is to say, the bearing surfaces 124 of the thru cup of FIGURE 11 are generally semi-circular in cross-section and approximate the profile of a plurality of adjacent needles.

A still further modified form of bearing cup is shown in FIGURE 12. The bearing cup 128 of FIGURE 12 has bearing surfaces defined at both the internal and external walls of the cup. Bearing surfaces 130 are defined at the internal wall of cup 128 and bearing surfaces 132 are defined at the external wall thereof. The internal bearing surfaces 130 of FIGURE 12 are adapted to make contact with the trunnion transfer surface 134. The external bearing surfaces 132 are adapted to make contact with the housing bearing surface which is that designated 83 in FIGURE 5.

The bearing surfaces of this invention may take many different forms and shapes depending upon design considerations. While in the preferred embodiment of the invention the bearing surfaces are shown as being essentially semi-circular in cross-section so as to approximate the profile of adjacent roller needles, it should be appreciated that other bearing shapes may be used.

The profile of bearing surface as shown in FIGURE 13a is defined by elliptical curves.

The profile of bearing surface as shown in FIGURE 13b is defined by curves approximating that of a sine wave.

The bearing surface profile of FIGURE 13c approximates that of closely spaced triangular members having either sharp or slightly rounded points.

The bearing surfaces of this invention may provide for a wide variety of contact points and contact areas including, but not limited to, line contact, point-to-point contact, line to cylinder contact, cylinder-to-cylinder contact, spherical contact, pyramidal contact, planar area-to-planar area contact, to name a few.

The preferred embodiment of bearing cup shown in FIGURES 6 and 7 and the alternate embodiments shown in FIGURES 9-13 may be manufactured using powder metallurgy techniques. These techniques afford the ability of forming the bearing surfaces to a precise degree and in a variety of shapes.

The structure of FIGURES 6, 7 and 9-13 may also be fabricated using conventional forming techniques such as drilling, broaching and the like.

While, thus far, the formation of the bearing surfaces has been described with reference to the bearing cup, it should also be appreciated that this invention includes structures in which the bearing surfaces are defined on the load transfer element (cross or tripot). Reference is made to FIGURE 8 wherein there is shown end 106 of a trunnion and in which a plurality of bearing surfaces 108 are defined on the trunnion. Bearing surfaces 108 are defined by spaced apart bearing members having a semi-circular cross-section. It should be understood that when the bearing surfaces are defined on the trunnion, the bearing cup or transfer member which is received over the trunnion has an essentially uninterrupted cylindrical internal surface or transfer surface against which the bearing surfaces 108 bear when the trunnion and cup are assembled.

It should be understood that utilization of powder metallurgy techniques permits the fabrication of many surface design configurations and shapes, thereby permitting essentially any theoretically or empirically determined structured bearing shapes from convex to concave.

As has been noted above, powder metallurgy techniques may be advantageously used to manufacture the various elements of this invention. In manufacturing a part using powder metallurgy techniques, three basic steps are normally employed, i.e., mixing, compacting and sintering.

In mixing, elemental or pre-alloyed metal powders are first mixed with lubricants or other alloy additions to produce a homogenous blend of ingredients.

In compacting, a controlled amount of mixed powder is gravity fed into a precision die and is compacted at varying pressures and temperatures depending upon the density requirements of the part.

In sintering, the compact is caused to be passed thru a controlled-atmosphere furnace. The part is heated to below the melting point of the base metal and held at the sintering temperature for a desired time before being cooled.

After sintering, the part may be impregnated with additional lubricant, machined, plated or heat treated.

Impregnation with oil or a resin after sintering is particularly advantageous to this invention as it affords a means to supply sufficient lubrication to the universal joint without the necessity of additional grease therein eliminating the need for the grease fitting and lubricant wells.

Impregnation of powder metallurgy parts may be achieved by soaking the parts in heated oil or by vacuum techniques. When the part is heated by friction in use, the oil expands and flows to the bearing surface. On cooling, the oil returns into the metallic pores of the part by capillary action.

In the preferred embodiment of this invention, high carbon steel powder material is used for either one or both of the bearing cup and the trunnion.

Advantages of the Invention

This invention affords a number of advantages not found in prior art structures.

First, material costs of the universal joint are reduced thru the elimination of roller needles, the grease fitting and grease in the cross or tripot. As a consequence, the skirt seal of prior art structures such as shown at 62 in FIGURE 4 may be eliminated in favor of a standard "O" ring. The "O" ring need serve only to shield the internal surfaces of the cup against foreign matter. It need not retain grease within the cup since lubrication is provided by means of the oil impregnated cup material.

Further cost reductions are possible by the use of this invention as assembly labor is reduced, there being no requirement to position a plurality of roller needles in the bearing cup prior to the placement of the cup on the trunnion.

Still further cost reductions are inherent in the elimination of the internal lubricant passages of the trunnion, the lubrication wells and the grease fitting along with the tapped hole necessary to retain the fitting in place on the trunnion.

Significant cost reduction also occurs thru this invention in employing powder metals. Powder metal processing provides a product in net or near net shape, thereby eliminating the need for turning, machining and grinding surfaces along with associated equipment. By fabricating both the trunnion and the bearing cup from powdered metals, essentially all machining, grinding and surface polishing operations are eliminated.

Installation and maintenance procedures are simplified with this invention. Without loose needles, installation time is reduced. Risk of surface contamination by the introduction of foreign matter is also reduced since needles that may have fallen out of the bearing cup during maintenance or installation do not exist.

The elimination of grease from the fitting greatly simplifies maintenance.

**Claims**

1. A power transmission system comprising:
   a) a driving shaft;
   b) a driven shaft;
   c) a power transmission device interconnecting said driving and driven shafts;
   d) said power transmission device including a load transfer element having a plurality of trunnions (39, 69), each trunnion defining a transfer surface (38, 70);
   e) a bearing member (86) associated with each of said transfer surfaces (38, 70); and
   f) said bearing member (86) having a surface which is operatively connected to a respective shaft;
   characterised in that each bearing member (86) is in direct contact with a respective transfer surface (38, 70), at a plurality of bearing surfaces (94, 108) defined either by an interrupted internal wall of said bearing member (86), or by an interrupted external wall of a respective trunnion (39, 69), said bearing surfaces (94, 108) being in direct bearing contact with an uninterrupted cylindrical transfer surface (96) on the trunnion or bearing member respectively, and said bearing surfaces being integral with and formed from the same continuous homogeneous material as their respective bearing member (86) or trunnion (39, 69), there being no junction or interface between said bearing surfaces and the body of the bearing member or trunnion respectively.

2. A system according to claim 1 in which said bearing member is defined by a cup (86, 99, 110, 120, 128) having a sidewall (88), said bearing surfaces (94, 116, 124) being defined at a surface of said sidewall of said cup.

3. A system according to claim 2 in which said bearing surfaces (124) are defined at the internal surface of said sidewall of said cup (120).

4. A system according to claim 2 in which said bearing surfaces (116) are defined at the external surface of said sidewall of said cup (110).

5. A system according to any one of claims 2 to 4 in which said cup has a closed end.

6. A system according to any one of claims 2 to 4 in which said cup is open at either end thereof.

7. A system according to any one of claims 2 to 6 in which said being member is defined by a cup (128) having a sidewall, said bearing surfaces being defined at an internal surface (130) of said sidewall, and additional bearing surfaces being defined at an external surface (132) of said sidewall.

8. A system according to any preceding claim in which said bearing surfaces extend substantially the length of said bearing member or trunnion.

9. A system according to any one of the preceding claims in which said bearing surfaces are essentially semi-circular in cross-section.

10. A system according to any one of claims 1 to 8 in which said bearing surfaces are defined by segments of a cylindrical surface.

11. A system according to any one of claims 1 to 8 in which said bearing surfaces are essentially elliptical in cross-section.

12. A system according to any one of claims 1 to 8 in which said bearing surfaces are essentially sinusoidal in cross-section.

13. A system according to any one of claims 1 to 8 in which said bearing surfaces are essentially triangular in cross-section.

14. A system according to any one of claims 1 to 8 in which said bearing surfaces are defined by curved surfaces.

15. A system according to claim 14 in which said curved surfaces are convex.

16. A system according to claim 14 in which said curved surfaces are defined by segments of concave (100) and cylindrical (102) surfaces.

17. A load transfer element for use in a system as defined in any one of claims 1 to 16, comprising:
a) a load transfer element having a plurality of trunnions (39, 69), each trunnion defining a transfer surface (38, 70);
b) a bearing member (86) associated with each of said transfer surfaces (38, 70); and

c) said bearing member (86) having a surface which may be operatively connected to a respective shaft;
characterised in that each bearing member (86) is in direct contact with a respective transfer surface (38, 70), at a plurality of bearing surfaces (94, 108) defined either by an interrupted internal wall of said bearing member (86), or by an interrupted external wall of a respective trunnion (39, 69), said bearing surfaces (94, 108) being in direct bearing contact with an uninterrupted cylindrical transfer surface (96) on the trunnion or bearing member respectively, and said bearing surfaces being integral with and formed from the same continuous homogeneous material as their respective bearing member (86) or trunnion (39, 69), there being no junction or interface between said bearing surfaces and the body of the bearing member or trunnion respectively.

18. A set according to claim 17 in which said bearing member is defined by a cup (86, 120) having a sidewall (38), said bearing surfaces (94, 128) being defined at a surface of said sidewall of said cup.

19. A set according to claim 18 in which said cup has an essentially cylindrical sidewall and a closed end.

20. A set according to claim 18 in which said cup is open at both ends and in which said sidewall has a curved outer surface.

21. A set according to any one of claims 18 to 20 in which said bearing surfaces (124) are defined at the internal surface of said cup (120).

22. A set according to any one of claims 18 to 20 in which said bearing surfaces (116) are defined at the external surface of said cup (110).

23. A set according to any one of claims 18 to 22 in which said bearing surfaces are defined at both the internal (130) and external surface (132) said cup (128).

24. A set according to any one of claims 17 to 23 in which said bearing surfaces are essentially semi-circular in cross-section.

25. A set according to any one of claims 17 to 23 in which said bearing surfaces are defined by segments of a cylindrical surface.

26. A set according to any one of claims 17 to 23 in which said bearing surfaces are defined by elliptical surfaces.

27. A set according to any one of claims 17 to 23 in which said bearing surfaces are defined by sinusoidal surfaces.

28. A set according to any one of claims 17 to 23 in which said bearing surfaces are defined by essentially triangular shaped surfaces.

29. A set according to any one of claims 17 to 23 in which said bearing surfaces are defined by curved surfaces.

30. A set according to claim 29 in which said curved surfaces are convex.

31. A set according to claim 29 in which said curved surfaces are defined by segments of concave (100) and cylindrical (102) surfaces.

32. A set according to any one of claims 17 to 31 in which said bearing surfaces extend substantially the length of said cup or trunnion.

33. A method of manufacture of a load transfer element of a joint interconnecting a driving shaft and a driven shaft in accordance with any preceding claim wherein
   a) a load transfer element is formed having a plurality of trunnions, each trunnion defining a transfer surface;
   b) a plurality of bearing members is formed each bearing member having an internal surface which defines integral bearing surfaces which may directly contact a respective transfer surface;
   c) said load transfer element and said bearing members are assembled.

34. A method according to claim 33 in which said forming step (b) is defined by the steps of mixing, compacting and sintering metal powders.

35. A method according to claim 33 in which said forming step (b) is defined by machining operations.

36. A method according to any one of claims 33 to 35 in which said step (b) is further defined by the step of impregnating said bearing member with a lubricant.

37. A method according to any one of claims 33 to 36 in which said forming step (a) is defined by the steps of mixing, compacting and sintering metal powders.

38. A method according to any one of claims 33 to 36 in which said forming step (a) is defined by a machining operation.

39. A method according to any one of claims 33 to 38 in which said step (a) is further defined by the step of impregnating said load transfer element with a lubricant.

## Revendications

1. Système de transmission de puissance comprenant :
   a) un arbre menant;
   b) un arbre mené;
   c) un dispositif de transmission de puissance reliant mutuellement lesdits arbres menant et mené;
   d) ledit dispositif de transmission de puissance comprenant un élément de transfert de charge comportant une pluralité de tourillons (39, 69), chaque tourillon formant une surface de transfert (38, 70);
   e) un élément porteur (86) associé à chacune desdites surfaces de transfert (38, 70); et
   f) ledit élément porteur (86) comportant une surface qui est fonctionnellement couplée à un arbre respectif;
   caractérisé en ce que chaque élément porteur (86) est en contact direct avec une surface de transfert respective (38, 70), à une pluralité de surfaces portantes (94, 108) formées soit par une paroi interne interrompue dudit élément porteur (86), soit par une paroi externe interrompue d'un tourillon respectif (39, 69), lesdites surfaces portantes (94, 108) étant en contact porteur direct avec une surface de transfert cylindrique ininterrompue (96) sur le tourillon ou élément porteur respectivement, et lesdites surfaces portantes étant en partie intégrantes et formées du même matériau homogène continu que leur élément porteur respectif (86) ou tourillon (39, 69), puisqu'il n'y a pas de jonction ou interface entre entre lesdites surfaces portantes et le corps de l'élément porteur ou tourillon respectivement.

2. Système selon la revendication 1 dans lequel ledit élément porteur est formé par une coupelle (86, 99, 110, 120, 128) comportant une paroi latérale (88), lesdites surfaces portantes (94, 116, 124) étant formées à une surface de ladite paroi latérale de ladite coupelle.

3. Système selon la revendication 2 dans lequel lesdites surfaces portantes (124) sont formées à la surface interne de ladite paroi latérale de ladite coupelle (120).

4. Système selon la revendication 2 dans lequel lesdites surfaces portantes (116) sont formées à la surface externe de ladite paroi latérale de ladite coupelle (110).

5. Système selon l'une quelconque des revendications 2 à 4 dans lequel ladite coupelle comporte une extrémité fermée.

6. Système selon l'une quelconque des revendications 2 à 4 dans lequel ladite coupelle est ouverte à l'une de ses extrémités.

7. Système selon l'une quelconque des revendications 2 à 6 dans lequel ledit élément porteur est formé par une coupelle (128) comportant une paroi latérale, lesdites surfaces portantes étant formées à une surface interne (130) de ladite paroi latérale, et des surfaces portantes supplémentaires étant formées à une surface externe (132) de ladite paroi latérale.

8. Système selon l'une quelconque des revendications précédentes dans lequel lesdites surfaces portantes s'étendent substantiellement le long dudit élément porteur ou tourillon.

9. Système selon l'une quelconque des revendications précédentes dans lequel lesdites surfaces portantes sont essentiellement circulaires en section transversale.

10. Système selon l'une quelconque des revendications 1 à 8 dans lequel lesdites surfaces portantes sont formées par des segments d'une surface cylindrique.

11. Système selon l'une quelconque des revendications 1 à 8 dans lequel lesdites surfaces portantes sont essentiellement elliptiques en section transversale.

12. Système selon l'une quelconque des revendications 1 à 8 dans lequel lesdites surfaces portantes sont essentiellement sinusoïdales en section transversale.

13. Système selon l'une quelconque des revendications 1 à 8 dans lequel lesdites surfaces portantes sont essentiellement triangulaires en section transversale.

14. Système selon l'une quelconque des revendications 1 à 8 dans lequel lesdites surfaces portantes sont formées par des surfaces incurvées.

15. Système selon la revendication 14 dans lequel lesdites surfaces incurvées sont convexes.

16. Système selon la revendication 14 dans lequel lesdites surfaces incurvées sont formées par des segments de surfaces concave (100) et cylindrique (102).

17. Elément de transfert de charge pour utilisation dans un système tel que défini dans l'une quelconque des revendications 1 à 16, comprenant :
a) un élément de transfert de charge comportant une pluralité de tourillons (39, 69), chaque tourillon formant une surface de transfert (38, 70);
b) un élément porteur (86) associé à chacune desdites surfaces de transfert (38, 70); et
c) ledit élément porteur (86) comportant une surface qui est fonctionnellement couplée à un arbre respectif;
caractérisé en ce que chaque élément porteur (86) est en contact direct avec une surface de transfert respective (38, 70), à une pluralité de surfaces portantes (94, 108) formées soit par une paroi interne interrompue dudit élément porteur (86), soit par une paroi externe interrompue d'un tourillon respectif (39, 69), lesdites surfaces portantes (94, 108) étant en contact porteur direct avec une surface de transfert cylindrique ininterrompue (96) sur le tourillon ou élément porteur respectivement, et lesdites surfaces portantes étant en partie intégrantes et formées du même matériau homogène continu que leur élément porteur respectif (86) ou tourillon (39, 69), puisqu'il n'y a pas de jonction ou interface entre entre lesdites surfaces portantes et le corps de l'élément porteur ou tourillon respectivement.

18. Ensemble selon la revendication 17 dans lequel ledit élément porteur est formé par une coupelle (86, 120) comportant une paroi latérale (38), lesdites surfaces portantes (94, 128) étant formées à une surface de ladite paroi latérale de ladite coupelle.

19. Ensemble selon la revendication 18 dans lequel ladite coupelle comporte une paroi latérale essentiellement cylindrique et une extrémité fermée.

20. Ensemble selon la revendication 18 dans lequel ladite coupelle est ouverte aux deux extrémités et dans lequel ladite paroi latérale comporte une surface externe incurvée.

21. Ensemble selon l'une quelconque des revendications 18 à 20 dans lequel lesdites surfaces portantes (124) sont formées à la surface interne de ladite coupelle (120).

22. Ensemble selon l'une quelconque des revendications 18 à 20 dans lequel lesdites surfaces portantes (116) sont formées à la surface externe de ladite coupelle (110).

23. Système selon l'une quelconque des revendications 18 à 22 dans lequel lesdites surfaces portantes (116) sont formées à la fois à la surface interne (130) et surface externe (132) de ladite coupelle (128).

24. Ensemble selon l'une quelconque des revendications 17 à 23 dans lequel lesdites surfaces portantes sont essentiellement circulaires en section transversale.

25. Ensemble selon l'une quelconque des revendications 17 à 23 dans lequel lesdites surfaces portantes sont formées par des segments d'une surface cylindrique.

26. Ensemble selon l'une quelconque des revendications 17 à 23 dans lequel lesdites surfaces portantes sont formées par des surfaces elliptiques.

27. Ensemble selon l'une quelconque des revendications 17 à 23 dans lequel lesdites surfaces portantes sont formées par des surfaces sinusoïdales.

28. Ensemble selon l'une quelconque des revendications 17 à 23 dans lequel lesdites surfaces portantes sont formées par des surfaces essentiellement triangulaires.

29. Ensemble selon l'une quelconque des revendications 17 à 23 dans lequel lesdites surfaces portantes sont formées par des surfaces incurvées.

30. Ensemble selon la revendication 29 dans lequel lesdites surfaces incurvées sont convexes.

31. Ensemble selon la revendication 29 dans lequel lesdites surfaces incurvées sont formées par des segments de surfaces concave (100) et cylindrique (102).

32. Ensemble selon l'une quelconque des revendications précédentes 17 à 31 dans lequel lesdites surfaces portantes s'étendent substantiellement le long de ladite coupelle ou dudit tourillon.

33. Procédé de fabrication d'un élément de transfert de charge d'un joint reliant mutuellement un arbre menant et un arbre mené selon l'une quelconque des revendications précédentes dans lequel :
    a) un élément de transfert de charge est formé comportant une pluralité de tourillons, chaque tourillon formant une surface de transfert;
    b) une pluralité d'éléments porteurs est formée, chaque élément porteur comportant une surface interne qui forme des surfaces portantes en parties intégrantes qui peuvent contacter directement une surface de transfert respective;
    c) ledit élément de transfert de charge et lesdits éléments porteurs sont assemblés.

34. Procédé selon la revendication 33 dans lequel ladite étape de formage (b) est constituée par les étapes de mélange, compactage et frittage de poudres métalliques.

35. Procédé selon la revendication 33 dans lequel ladite étape de formage (b) est constituée par les opérations d'usinage.

36. Procédé selon l'une quelconque des revendications 33 à 35 dans lequel ladite étape (b) est en outre constituée par l'étape d'imprégnation dudit élément porteur avec un lubrifiant.

37. Procédé selon l'une quelconque des revendications 33 à 36 dans lequel ladite étape de formage (a) est constituée par les étapes de mélange, compactage et frittage de poudres métalliques.

38. Procédé selon l'une quelconque des revendications 33 à 36 dans lequel ladite étape de formage (a) est constituée par une opération d'usinage.

39. Procédé selon l'une quelconque des revendications 33 à 38 dans lequel ladite étape (a) est en outre constituée par l'étape d'imprégnation dudit élément de transfert de charge avec un lubrifiant.

**Ansprüche**

1. Kraftübertragungssystem mit:
   a) einer Antriebswelle,
   b) einer Abtriebswelle,
   c) einer kraftübertragungseinrichtung, welche Antriebs- und Abtriebswelle miteinander verbindet,
   d) wobei die Kraftübertragungseinrichtung ein Lastübertragungselement aufweist, das eine Mehrzahl von Schildzapfen (39, 69) hat, wobei jeder Schildzapfen eine Übertragungsfläche (38, 70) definiert,
   e) einem Lagerteil (86), welches zu je einer der Übertragungsflächen (38, 70) gehört, und wobei
   f) das Lagerteil (86) eine Oberfläche hat, die in Wirkverbindung zu einer entsprechenden Welle steht,
   dadurch gekennzeichnet, daß jedes Lagerteil (86) in direktem Kontakt mit einer entsprechenden Übertragungsfläche (38, 70) ist, und zwar an einer Mehrzahl von Lageroberflächen (94, 108), welche entweder durch eine unterbrochene innere Wand des Lagerteiles (86) oder durch eine unterbrochene äußere Wand eines entsprechenden Schildzapfens (39, 69) definiert sind, wobei die Lageroberflächen (94, 108) in direktem Lagerkontakt mit einer nicht unterbrochenen zylindrischen Übertragungsfläche (96) an dem Schildzapfen bzw. Lagerteil stehen und wobei die Lageroberflächen einstückig mit dem entsprechenden Lagerteil (86) oder Schildzapfen (39, 69) und aus demselben kontinuierlichen, homogenen Material gebildet sind, wobei es keine Zusammenfügung oder Zwischenfläche zwischen den Lageroberflächen und dem Korpus des Lagerteiles bzw. des Schildzapfens gibt.

2. System nach Anspruch 1, bei welchem das Lagerteil durch eine Kappe (86, 99, 110, 120, 128) bzw. Buchse definiert ist, welche eine Seitenwand (88) hat, wobei die Lageroberflächen (94, 116, 124) an einer Oberfläche der Seitenwand der Kappe definiert sind.

3. System nach Anspruch 2, bei welchem die Lageroberflächen (124) an der inneren Oberfläche der Seitenwand der Kappe (120) definiert sind.

4. System nach Anspruch 2, bei welchem die Lageroberflächen (116) an der Außenoberfläche der Seitenwand der Kappe (110) definiert sind.

5. System nach einem der Ansprüche 2 bis 5, bei welchem die Kappe ein geschlossenes Ende (Stirnseite) hat.

6. System nach einem der Ansprüche 2 bis 4, bei welchem die Kappe (Buchse) an beiden Enden offen ist.

7. System nach einem der Ansprüche 2 bis 6, bei welchem das Lagerteil durch eine Kappe (128) definiert wird, welche eine Seitenwand hat, wobei die Lageroberflächen an einer inneren Oberfläche (130) der Seitenwand definiert sind und wobei zusätzliche Lageroberflächen an einer äußeren Oberfläche (132) der Seitenwand definiert sind.

8. System nach einem der vorstehenden Ansprüche, bei welchem die Lageroberflächen sich im wesentlichen über die Länge des Lagerteiles oder Schildzapfens erstrecken.

9. System nach einem der vorstehenden Ansprüche, bei welchem die Lageroberflächen im Querschnitt im wesentlichen halbkreisförmig sind.

10. System nach einem der Ansprüche 1 bis 8, bei welchem die Lageroberflächen durch Segmente einer zylindrischen Oberfläche definiert sind.

11. System nach einem der Ansprüche 1 bis 8, bei welchem die Lageroberflächen im Querschnitt im wesentlichen elliptisch sind.

12. System nach einem der Ansprüche 1 bis 8, bei welchem die Lageroberflächen im Querschnitt im wesentlichen sinusförmig sind.

13. System nach einem der Ansprüche 1 bis 8, bei welchem die Lageroberflächen im Querschnitt im wesentlichen dreieckig sind.

14. System nach einem der Ansprüche 1 bis 8, bei welchem die Lageroberflächen durch gekrümmte Oberflächen definiert werden.

15. System nach Anspruch 14, bei welchem die gekrümmten Oberflächen konvex sind.

16. System nach Anspruch 14, bei welchem die gekrümmten Oberflächen durch Segmente von konkaven (100) und zylindrischen (102) Oberflächen definiert sind.

17. Lastübertragungselement für die Verwendung an einem System, wie es in einem der Ansprüche 1 bis 16 definiert ist, mit:

a) einem Lastübertragungselement, welches eine Mehrzahl von Schildzapfen (39, 69) hat, wobei jeder Schildzapfen eine Übertragungsoberfläche (38, 70) definiert,

b) einem Lagerteil (86), welches mit jeder der Übertragungsoberflächen (38, 70) verknüpft ist,

c) wobei das Lagerteil (86) eine Oberfläche hat, die in Wirkverbindung mit einer entsprechenden Welle bringbar ist,

dadurch gekennzeichnet, daß jedes Lagerteil (86) in direktem Kontakt mit einer entsprechenden Übertragungsoberfläche (38, 70) steht, bei einer Mehrzahl von Lageroberflächen (94, 108), welche entweder durch eine unterbrochene innere Wand des Lagerteiles (86) oder durch eine unterbrochene äußere Wand eines entsprechenden Schildzapfens (39, 69) definiert sind, wobei die Lageroberflächen (94, 108) in direktem Lagerkontakt mit einer nicht unterbrochenen, zylindrischen Übertragungsoberfläche (96) an dem Schildzapfen bzw. an dem Lagerteil stehen, und wobei die Lageroberflächen einstückig mit demselben kontinuierlichen, homogenen Material und aus diesem gebildet sind, wie das entsprechende Lagerteil (86) oder der Schildzapfen (39, 69), wobei es keinen Übergang (Zusammenfügung) oder Zwischenfläche zwischen den Lageroberflächen und dem Korpus des Lagerteiles bzw. des Schildzapfens gibt.

18. Anordnung nach Anspruch 17, bei welchem das Lagerteil durch eine Kappe (86, 120) definiert ist, die eine Seitenwand (38) hat, wobei die Lageroberflächen (94, 128) an einer Oberfläche der Seitenwand der Kappe definiert sind.

19. Anordnung nach Anspruch 18, bei welcher die Kappe eine im wesentlichen zylindrische Seitenwand und ein geschlossenes Ende aufweist.

20. Anordnung nach Anspruch 18, bei welcher die Kappe an beiden Enden offen ist und bei welcher die Seitenwand eine gekrümmte Außenfläche hat.

21. Anordnung nach einem der Ansprüche 18 bis 20, bei welcher die Lageroberflächen (124) an der inneren Oberfläche der Kappe (120) definiert sind.

22. Anordnung nach einem der Ansprüche 18 bis 20, bei welcher die Lageroberflächen (116) an der äußeren Oberfläche der Kappe (110) definiert sind.

23. Anordnung nach einem der Ansprüche 18 bis 22, bei welcher die Lageroberflächen sowohl an der inneren (130) als auch an der äußeren Oberfläche (132) der Kappe (128) definiert sind.

24. Anordnung nach einem der Ansprüche 17 bis 23, bei welcher die Lageroberflächen im Querschnitt im wesentlichen halbkreisförmig sind.

25. Anordnung nach einem der Ansprüche 17 bis 23, bei welcher die Lageroberflächen durch Segmente einer zylindrischen Oberfläche definiert sind.

26. Anordnung nach einem der Ansprüche 17 bis 23, bei welcher die Lageroberflächen durch elliptische Oberflächen definiert sind.

27. Anordnung nach einem der Ansprüche 17 bis 23, wobei die Lageroberflächen durch sinusförmige Flächen definiert sind.

28. Anordnung nach einem der Ansprüche 17 bis 23, bei welcher die Lageroberflächen im wesentlichen durch dreieckig geformte Oberflächen definiert sind.

29. Anordnung nach einem der Ansprüche 17 bis 23, bei welcher die Lageroberflächen durch gekrümmte Oberflächen definiert sind.

30. Anordnung nach Anspruch 29, bei welcher die gekrümmten Oberflächen konvex sind.

31. Anordnung nach Anspruch 29, bei welcher die gekrümmten Oberflächen durch Segmente aus konkaven (100) und zylindrischen (102) Oberflächen gebildet werden.

32. Anordnung nach einem der Ansprüche 17 bis 31, bei welcher die Lagerflächen sich im wesentlichen über die Länge der Kappe oder des Schildzapfens erstrecken.

33. Verfahren zum Herstellen eines Lastübertragungselementes einer Verbindung, die eine Antriebswelle und eine Abtriebswelle gemäß einem der vorstehenden Ansprüche miteinander verbindet, wobei

a) ein Lastübertragungselement gebildet wird, welches eine Mehrzahl von Schildzapfen hat, wobei jeder Schildzapfen eine Übertragungsoberfläche definiert,

b) eine Mehrzahl von Lagerteilen gebildet wird, wobei jedes Lagerteil eine innere Oberfläche hat, die einstückige Lageroberflächen definiert, welche direkt mit der entsprechenden Übertragungsoberfläche in Berührung treten können,

c) das Lastübertragungselement und die Lagerteile zusammenmontiert werden.

**34.** Verfahren nach Anspruch 33, bei welchem der Ausbildungsschritt (b) durch die Schritte des Mischens, Kompaktierens und Sinterns von Metallpulvern definiert ist.

**35.** Verfahren nach Anspruch 33, bei welchem der Ausbildungsschritt (b) durch maschinelle (spanabhebende) Arbeitsvorgänge definiert ist.

**36.** Verfahren nach einem der Ansprüche 33 bis 35, bei welchem der Schritt (b) weiterhin definiert wird durch den Schritt, das Lagerteil mit einem Schmiermittel zu benetzen bzw. zu imprägnieren.

**37.** Verfahren nach einem der Ansprüche 33 bis 36, bei welchem der Ausbildungsschritt (a) definiert wird durch die Schritte des Mischens, Kompaktierens und Sinterns von Metallpulvern.

**38.** Verfahren nach einem der Ansprüche 33 bis 36, bei welchem der Ausbildungsschritt (a) definiert ist durch einen maschinellen (spanabhebenden) Arbeitsvorgang.

**39.** Verfahren nach einem der Ansprüche 33 bis 38, bei welchem der Schritt (a) weiterhin definiert wird durch den Schritt, das Lastübertragungselement mit einem Schmiermittel zu benetzen bzw. zu imprägnieren.

FIG.1
(PRIOR ART)

FIG.2
(PRIOR ART)

FIG.3
(PRIOR ART)

FIG.4
(PRIOR ART)

FIG. 5 (PRIOR ART)

FIG. 6

FIG. 7

EP 0 188 532 B1

FIG.8

FIG.9

FIG.10

FIG.11

FIG.12

FIG.13A

FIG.13B

FIG.13C